# EUROPEAN PATENT SPECIFICATION

(11) **EP 2 368 923 B1**
(45) Date of publication and mention of the grant of the patent: **01.05.2013**
(21) Application number: 11154271.8
(22) Date of filing: 14.02.2011
(51) Int. Cl.: C08F 220/06, C08F 220/28, C08F 220/58, C08F 2/10, C08F 4/10, C08F 4/26, C08F 4/40

(54) **Method for producing hydrophobically modified acrylic rheology modifiers**
Verfahren zur Herstellung von wasserabweisenden modifizierten Acrylrheologiemodifikatoren
Procédé de production de modificateurs de rhéologie acrylique hydrophobiquement modifiée

(30) Priority: 23.03.2010 US 316534 P
(43) Date of publication of application: 28.09.2011
(73) Proprietor: Rohm and Haas Company, Philadelphia, Pennsylvania 19106-2399 (US)
(72) Inventor: Bobsein, Barrett Richard, Sellersville, PA 18960 (US); Creamer, Marianne Patricia, Warrington, PA 18976 (US); Greyson, Eric, Blue Bell, PA Pennsylvania 19422 (US); Madle, Thomas, Flourtown, PA Pennsylvania 19031 (US); Manna, Joseph, Quakertown, PA Pennsylvania 18951 (US)
(74) Representative: Buckley, Guy Julian

(56) References cited:
- CN-A- 101 649 024
- US-A- 3 763 277
- DATABASE WPI Week 198912 Thomson Scientific, London, GB; AN 1989-090002 XP002632656, -& JP 1 040594 A (NITTO CHEM IND CO LTD) 10 February 1989 (1989-02-10)

## Description

### Background

This invention generally relates to a method for preparing hydrophobically modified acrylic rheology modifiers.

Aqueous formulations typically use thickeners to obtain a desired rheology profile. For example, an aqueous paper coating composition requires rheology modifiers to provide sufficient low shear viscosity to allow pickup and application of the coating composition onto a paper substrate as well as the appropriate high shear viscosity to allow metering of the excess applied coating composition to obtained a desired coating weight. One class of thickeners suitable for thickening aqueous formulations are alkali-soluble thickeners. These thickeners, also referred to as alkali-swellable thickeners, are copolymers formed by the polymerization of ethylenically unsaturated monomers and contain acid groups pendant to backbone of the copolymer. Alkali-soluble thickeners have also been prepared containing pendant nonionic surfactant groups or hydrophobes. These thickeners, known in the art as hydrophobically-modified alkali-soluble (swellable) thickeners, are characterized by increased thickening efficiency compared to alkali-soluble thickeners of similar composition and molecular weight. U.S. Patent 4,384,096 discloses a method for preparing rheology modifiers containing hydrophobes. However, the disclosed process is a thermally initiated polymerization.

The problem solved by the present invention is to improve the method for preparing hydrophobically modified (meth)acrylate rheology modifiers to obtain rheology modifiers with an improved viscosity profile.

### Statement of the Invention

The present invention is directed to a method for preparing hydrophobically modified rheology modifiers; said method comprising polymerizing a monomer mixture comprising:
(i) a monomer selected from the group consisting of:
   (a) H₂C=C(R)C(O)X(CH₂CH₂O)ₙ(CH(R')CH₂O)ₘR";
   (b) H₂C=C(R)C₆H₄C(CH₃)₂NHCO₂(CH₂CH₂O)ₙ(CH(R')CH₂O)ₘR"; and combinations thereof; wherein X is O or NH, R is H or CH₃, R' is C₁-C₂ alkyl; R" is C₈-C₂₂ alkyl, C₈-C₁₆ alkylphenyl or C₁₃-C₃₆ aralkylphenyl; n is an average number from 6-100 and m is an average number from 0-50, provided that n≥m and m+n is 6-100 and (ii) a C₃-C₆ carboxylic acid monomer; wherein at least 30% of polymerization occurs in the presence of an oxidant, a reductant and a metal catalyst, and substantially in the absence of a peroxide, hydroperoxide or perester containing an alkyl group having at least five carbon atoms.

### Detailed Description of the Invention

All percentages are weight percentages (wt%), unless otherwise indicated and all temperatures are in °C, unless otherwise indicated. Weight average molecular weights, M_{w}, are measured by gel permeation chromatography (GPC) using polyacrylic acid standards, as is known in the art. The techniques of GPC are discussed in detail in Modern Size Exclusion Chromatography, W. W. Yau, J. J. Kirkland, D. D. Bly; Wiley-Interscience, 1979, and in A Guide to Materials Characterization and Chemical Analysis, J. P. Sibilia; VCH, 1988, p. 81-84. The molecular weights reported herein are in units of daltons. As used herein the term "(meth)acrylic" refers to acrylic or methacrylic. A "C₃-C₆ carboxylic acid monomer" is a mono-ethylenically unsaturated compound having one or two carboxylic acid groups, e.g., (meth)acrylic acid, maleic acid, fumaric acid, itaconic acid, maleic anhydride, crotonic acid, etc. Alkyl groups are saturated hydrocarbyl groups which may be straight or branched. Aralkyl groups are alkyl groups substituted by aryl groups. Examples of aralkyl groups include, e.g., benzyl, 2-phenylethyl and 1-phenylethyl. Aralkylphenyl groups are phenyl groups having one or more aralkyl substituents, e.g., 2,4,6-tris(1-phenylethyl)phenyl.

The redox systems used in the method of this invention use one or more oxidants in combination with a suitable reductant and a metal catalyst. Preferably, at least 40 wt% of total monomer is polymerized in the presence of the redox system, preferably at least 50 wt%, preferably at least 60 wt%, preferably at least 70 wt%, preferably at least 80 wt%. The total weight of monomers includes any monomer which already has been polymerized at the time the redox system is added. Suitable oxidants include, e.g., t-alkyl hydroperoxides, t-alkyl peroxides, and t-alkyl peresters, wherein in each case the t-alkyl group has fewer than 5 carbon atoms; hydrogen peroxide, sodium peroxide, potassium peroxide, persulfate, percarbonate, perborate, perphosphoric acid and salts thereof, potassium permanganate, and ammonium or alkali metal salts of peroxydisulfuric acid. Preferred oxidants include persulfate, percarbonate and perborate; preferably persulfate. In the method of this invention, polymerization occurs substantially in the absence of a peroxide, hydroperoxide or perester containing an alkyl group having at least five carbon atoms. Herein, the phrase "substantially in the absence" means that the oxidant contains less than 5 wt% of peroxides, hydroperoxides or peresters having C₅ or larger alkyl groups, preferably less than 2 wt%, preferably less than 1 wt %, preferably less than 0.5 wt%, preferably less than 0.1 wt%, preferably 0 wt%. In some preferred embodiments, polymerization is conducted substantially in the absence of any peroxides, hydroperoxides or peresters. Preferably, oxidants are present at a total level of from 0.01 to 1 wt %, based on the total weight of the monomers, preferably from 0.03 to 0.5 wt%, preferably from 0.05 to 0.25 wt%. Suitable reductants include sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide, dithionite, formadinesulfinic acid, hydroxymethanesulfonic acid, sodium 2-hydroxy-2-sulfinatoacetic acid, acetone bisulfite, amines such as ethanolamine, acids such as glycolic acid, glyoxylic acid hydrate, lactic acid, glyceric acid, malic acid, tartaric acid, and salts of the preceding acids. Preferably the reductant is isoascorbic acid. Preferably, reductants are present at a total level of from 0.01 to 1 wt %, based on the total weight of the monomers preferably from 0.03 to 0.4 wt%, preferably from 0.05 to 0.2 wt%. Suitable metal catalysts are redox reaction catalyzing metal salts including, e.g., iron, copper, manganese, silver, platinum, vanadium, nickel, chromium, palladium, and cobalt. Preferred metal catalysts are selected from iron, copper and combinations thereof; preferably iron. Preferably, metal catalysts are present at a total level of at least 0.1 ppm, based on metal ion content in the total weight of the monomers, preferably at least 0.5 ppm, preferably at least 1 ppm, preferably at least 2 ppm, preferably at least 3 ppm, preferably at least 4 ppm; preferably the metal catalysts are present at a total level no greater than 100 ppm, preferably no greater than 50 ppm, preferably no greater than 25 ppm, preferably no greater than 20 ppm. The total weight of monomers includes any monomer which already has been polymerized at the time the oxidant, reductant and metal ion are added. When the part of the polymerization reaction catalyzed by oxidant, reductant and metal ion is conducted in contact with equipment containing catalytic metals, e.g., steel reactors, it may not be necessary to add additional metal ion with the other reactants. In some preferred embodiments of the invention, a portion of the monomer mixture is partially polymerized using an oxidant as the intiator, followed by addition of the remaining monomer and polymerization in the presence of an oxidant, a reductant and a metal catalyst. Preferably, less than 50 wt% of total monomer is polymerized using a thermal oxidant, preferably less than 25 wt%, preferably less than 15 wt%, preferably less than 10 wt%. This thermally polymerized material can be formed in situ at the beginning of the polymerization, or from a previously prepared polymer seed, or as the result of a "chaser" addition. Additionally, the polymerization could be started using a redox process (oxidant/ reductant/ and metal catalyst), the second stage employing a thermal process. The redox portion of the process can be a gradual feed, a shot, a feed followed by a shot, or a shot followed by a feed, or other possible combinations. A shot addition is one in which monomer is added over a relatively short time, e.g., less than 20 minutes, preferably less than 15 minutes, preferably less than 10 minutes, so that the reaction mixture will contain substantial unreacted monomer after the addition. Typically, shot additions contain only monomer, with catalysts being added to the reaction mixture separately, preferably after the shot addition. After most of the polymerization is complete, i.e., at least 85%, preferably at least 90%, preferably at least 95%; additional initiators may be added as a "chaser" to polymerize most of the residual monomer. The chaser may be a thermal initiator or a redox system.

Redox feed run at a monomer addition process temperature from 35 °C to 85 °C, preferably from 40 °C to 75 °C, preferably from 40 °C to 70 °C. For the optional redox shot process, the preferred temperature range to start the polymerization is 35 °C to 85 °C, preferably 40 °C to 75 °C, preferably from 40 °C to 70 °C. The preferred peak temperature after conversion (exotherm) of the monomer shot to polymer is 35 °C to 95 °C, preferably 45 °C to 80 °C, preferably from 50 °C to 75 °C.

Preferably, the rheology modifier is an acrylic polymer, i.e., one having at least 50 wt% polymerized residues of acrylic monomers, preferably at least 70 wt%, preferably at least 80 wt%, preferably at least 90 wt%, preferably at least 95 wt%, preferably at least 98 wt%. Acrylic monomers include (meth)acrylic acids and their C₁-C₂₂ alkyl or hydroxyalkyl esters, including monomers of structure H₂C=C(R)CO₂(CH₂CH₂O)ₙ(CH(R')CH₂O)ₘR"; crotonic acid, itaconic acid, fumaric acid, maleic acid, maleic anhydride, (meth)acrylamides, (meth)acrylonitrile and alkyl or hydroxyalkyl esters of crotonic acid, itaconic acid, fumaric acid or maleic acid. Preferably, the acrylic polymer also comprises other polymerized monomer residues including, e.g., non-ionic (meth)acrylate esters, cationic monomers, H₂C=C(R)C₆H₄C(CH₃)_{z}NHCO₂(CH₂CH₂O)ₙCH(R')CH₂O)ₘR", monounsaturated dicarboxylates, vinyl esters, vinyl amides (including, e.g., N-vinylpyrrolidone), sulfonated acrylic monomers, vinyl sulfonic acid, vinyl halides, phosphorus-containing monomers, heterocyclic monomers, styrene and substituted styrenes. Preferably, the rheology modifier comprises from 15 to 60 wt% polymerized residues of C₃-C₆ carboxylic acid monomers, preferably from 22 to 55 wt%, preferably from 30 to 50 wt%, preferably from 23 to 30 wt%. Preferably, the C₃-C₆ carboxylic acid monomer is a C₃-C₄ carboxylic acid monomer; preferably the C₃-C₄ carboxylic acid monomer is selected from among (meth)acrylic acid and maleic acid, preferably (meth)acrylic acid, preferably methacrylic acid. Preferably, the rheology modifier comprises polymerized residues of a monomer having the structure H₂C=C(R)C(O)X(CH₂CH₂O)ₙ(CH(R')CH₂O)ₘR". Preferably, X is O. Preferably, the rheology modifier comprises from 1 to 25 wt% polymerized residues of monomers of structure H₂C=C(R)C(O)X(CH₂CH₂O)ₙ(CH(R')CH₂O)ₘR", preferably from 1 to 15 wt%, preferably from 1 to 6 wt%, preferably from 5 to 25 wt%, preferably from 6 to 15 wt%. Preferably, R" is C₈-C₂₂ alkyl, preferably C₁₀-C₂₂ alkyl, preferably C₁₂-C₂₀ alkyl. Preferably, n is 15-30 and m is 0-5; preferably n is 18-25 and m is 0-3; preferably n is 18-25 and m is 0-2; preferably R' is methyl. Preferably, R is methyl. Preferably, R" is C₁₀-C₂₂ alkyl, n is 15-30 and m is 0-5; preferably, R" is C₁₂-C₂₂ alkyl, n is 18-25, m is 0-3 and R is methyl. Preferably, the rheology modifier further comprises from 25 to 65 wt% polymerized residues of C₁-C₄ alkyl (meth)acrylates, preferably from 30 to 60 wt%, preferably from 40 to 60 wt%. Preferably, the C₁-C₄ alkyl (meth)acrylate residues are C₂-C₃ alkyl (meth)acrylate residues, preferably C₂-C₃ alkyl acrylates, preferably ethyl acrylate.

In some preferred embodiments of the present invention, the rheology modifier is a crosslinked polymer, that is, a crosslinker, such as a monomer having two or more nonconjugated ethylenically unsaturated groups, is included with the copolymer components during polymerization. Preferred examples of such monomers include, e.g., di- or tri-allyl ethers and di- or tri-(meth)acrylyl esters of diols or polyols (e.g., trimethylolpropane diallyl ether, ethylene glycol dimethacrylate), di- or tri-allyl esters of di- or tri-acids, allyl (meth)acrylate, divinyl sulfone, triallyl phosphate, divinylaromatics (e.g., divinylbenzene). In some preferred embodiments, the amount of crosslinker residue in the rheology modifier is at least 0.01 wt%, preferably at least 0.05 wt% preferably at least 0.1 wt%, based on weight of the polymer. Preferably, the amount of crosslinker residue is no more than 2 wt%, preferably no more than 1.5 wt%, preferably no more than 1 wt%, preferably no more than 0.5 wt%, preferably no more than 0.3 wt%, preferably no more than 0.2 wt%.

In some preferred embodiments of the invention, chain transfer agents are included in the polymerization mixture. Typical chain transfer agents used in emulsion polymerization include mercaptoalkanes and mercapto alkyl esters, e.g., n-decyl mercaptan, n-dodecyl mercaptan, tert-dodecyl mercaptan, tert-butyl mercaptan, methyl 3-mercaptopropionate, butyl 3-mercaptopropionate, i-octyl 3-mercaptopropionate, decyl 3-mercaptopropionate, dodecyl 3-mercaptopropionate, 2-ethyl hexyl 3-mercaptopropionate, and octadecyl 3-mercaptopropionate. Preferably, the amount of chain transfer agent in the rheology modifier is at least 0.05 wt%, preferably at least 0.1 wt%, preferably at least 0.2 wt%, based on weight of the polymer. Preferably, the amount of chain transfer agent residue is no more than 0.5 wt%, preferably no more than 0.3 wt%, preferably no more than 0.2 wt%, preferably no more than 0.1 wt%, preferably no more than 0.05 wt% based on weight of the polymer.

Typically, when the polymer is used as a thickener or rheology modifier, a typical weight average molecular weight is in the range of from 100,000 to 10,000,000, preferably from 200,000 to 5,000,000.

Preferably, the rheology modifier is provided as an aqueous composition containing the polymer as discrete particles dispersed in an aqueous medium. In this aqueous dispersion, the average particle diameter of the polymer particles is typically in the range of from 20 to 1,000 nm, preferably in the range of from 50 to 500 nm, and more preferably, in the range of from 75 to 350 nm. Particle sizes herein are those determined using a Brookhaven Model BI-90 particle sizer manufactured by Brookhaven Instruments Corporation, Holtsville, NY, reported as "effective diameter". The level of polymer particles in the aqueous dispersion is typically in the range of from 15 to 60 weight %, based on the weight of the aqueous dispersion.

Preferably, the rheology modifier is provided as an aqueous composition containing the polymerized monomers as a partly or fully solubilized polymer in an aqueous medium. Partly soluble polymer refers to a polymer that is not fully soluble in the aqueous medium, such as a swellable polymer particle that is enlarged by imbibing the aqueous medium but still retains some aspect of the particle shape. The solution containing the partly or completely solubilized polymer is characterized as having a translucent, semi-transparent, or transparent appearance. Suitable pH ranges for the aqueous solution of this embodiment are related to the level of pendant ionic groups attached to the polymer. A polymer containing less than 70 weight % acid monomer as polymerized units, based on the total weight of the polymer, is typically partly or completely soluble in an aqueous medium having a pH that is at or above the pKₐ of the pendant acid groups. For example, a polymer containing from 25 to 65 weight % polymerized acid monomer, based on the total weight of the polymer, is typically partly or completely soluble at a pH in the range of 5 to 14.

Suitable bases to adjust the pH of the polymer dispersion include mineral bases such as sodium hydroxide and potassium hydroxide; ammonium hydroxide; and organic bases such as triethylamine. Mixtures of bases may be used. Suitable acids to adjust the pH of the aqueous medium include mineral acid such as hydrochloric acid, phosphorus acid, and sulfuric acid; and organic acids such as acetic acid. Mixtures of acids may be used.

Suitable polymerization techniques for use in the method of this invention include emulsion polymerization and solution polymerization. Aqueous emulsion polymerization processes typically are conducted in an aqueous reaction mixture, which contains at least one monomer and various synthesis adjuvants such as the free radical sources, buffers, and reductants in an aqueous reaction medium. The aqueous reaction medium is the continuous fluid phase of the aqueous reaction mixture and contains greater than 50 weight % water and optionally one or more water miscible solvents, based on the weight of the aqueous reaction medium. Suitable water miscible solvents include methanol, ethanol, propanol, acetone, ethylene glycol ethyl ethers, propylene glycol propyl ethers, and diacetone alcohol. Preferably, the aqueous reaction medium contains greater than 90 weight % water, and more preferably, greater than 95 weight % water, based on the weight of the aqueous reaction medium. Most preferred is an aqueous reaction medium containing from 98 to 100 weight % water, based on the weight of the aqueous reaction medium.

The hydrophobically modified rheology modifier is useful as a thickener for paints and other coating compositions, additive for cement products, paper coating thickener, rheology modifier for personal care products (e.g., shampoo, body wash), thickener for laundry detergent formulations, deicing fluids and adhesives, and as an additive for oilfield applications, e.g., oil-water clarification and water-in-oil separation.

The rheology modifier may be used in a "back-acid" formulation wherein the formulated polymer is partially neutralized at high pH, then re-acidified to lower the pH, as described in EP 1,272,159. The rheology modifier also may be used in formulations containing synthetic clays as co-thickeners, e.g., Laponite clays.

### Polymer synthesis

MA-20 = methacrylate ester of a 20 ethoxylate of cetyl-stearyl alcohol (70%), 20% methacrylic acid, 10% water
MA-23 = methacrylate ester of a 23 ethoxylate of lauryl alcohol (70%), 30% methacrylic acid

### Example 1 (redox)

To a three liter round bottom flask, equipped with a mechanical stirrer, heating mantle, thermocouple, condenser and inlets for the addition of monomer, initiator and nitrogen was charge 18.7 grams of 28% sodium lauryl sulfate and 731 grams of deionized water. The mixture was set to stir with a nitrogen flow of 20 mls/minute and heated to 89°C. To a plastic lined vessel, 12.6 grams of 28% sodium lauryl sulfate and 630 grams deionized water was added and mixed with overhead stirring. 99 grams of MA-20 was charged to the vessel followed by 343 grams of ethyl acrylate (EA) and then 261 grams of methacrylic acid (MAA) was added slowly to form a smooth, stable monomer emulsion. 68.6 grams of the stable monomer emulsion seed was set aside. A kettle initiator charge was prepared adding 0.75 grams of sodium persulfate and 21.4 grams of deionized water and set aside. A cofeed activator solution of 0.77 grams of isoascorbic acid and 75 grams of deionized water was prepared and added to syringe for the addition to the kettle. A cofeed catalyst solution of 0.38 grams of sodium persulfate and 75 grams of deionized water was prepared and added to syringe for the addition to the kettle.

When the reaction was at temperature, the monomer emulsion seed was added to the kettle and rinsed with 28 grams of deionized water, which was immediately followed by the kettle initiator charge. The kettle contents was allowed to react and exotherm to 85°C, and then held for 10 minutes. At the completion of the hold, the reaction was then cooled to 51°C. An addition of 28.6 grams of a solution of 0.15% iron sulfate heptahydrate was added to the kettle during the cool down.

When the reaction temperature reached 51°C, with a bottom target temperature of 48°C, the initiator activator and catalyst cofeeds were started at a rate of 0.815 mls / minute over 92 minutes. 2 minutes after the start of the initiator cofeed solutions, the monomer emulsion cofeed began at a rate of 14.18 mls / minute for a total of 90 mins. At the completion of the reaction, the feed lines were rinsed with 51 grams of deionized water and held at 48°C for 10 minutes. During the hold chaser solutions were prepared. 0.28 grams isoascorbic acid was dissolved in 25 grams deionized water and added to a syringe. 0.5 grams of a 70% tert-butyl hydroperoxide was mixed with 25 grams deionized water and added to a syringe. At the end of the hold, the chaser solutions were added linearly over 10 minutes and held 20 minutes at 48°C. The reaction was then allowed to cool to room temperature and filtered through a 100 mesh bag. The final emulsion polymer had a solids content of 28.11% and a pH = 2.5. By GC, the total polymers residual monomer content was <5 ppm.

### Example 2 (Comparative)

To a three liter round bottom flask, equipped with a mechanical stirrer, heating mantle, thermocouple, condenser and inlets for the addition of monomer, initiator and nitrogen was charge 17.55 grams of 28% sodium lauryl sulfate and 792.5 grams deionized water. The mixture was set to stir with a nitrogen flow and heated to 89°C. To a plastic lined vessel, 11.75 grams of 28% sodium lauryl sulfate and 815 grams deionized water was added and mixed with overhead stirring. 93.55 grams of MA-20 was charged to the vessel followed by 327.5 grams ethyl acrylate and then 243.3 grams methacrylic acid was added slowly to form a smooth, stable monomer emulsion. 54.9 grams of the stable monomer emulsion seed was set aside. A kettle initiator charge was prepared adding 0.70 grams ammonium persulfate and 20 grams deionized water and set aside. Cofeed catalyst solution of 0.3 grams ammonium persulfate dissolved in 60 grams deionized water was added to a syringe.

When the reaction was at temperature, the monomer emulsion seed was added to the kettle and rinsed with 27.5 grams deionized water, which was immediately followed by the kettle initiator charge solution. The kettle contents was allowed to react and immediately after the peak exotherm is observed and temperature is 85-89°C, begin monomer emulsion at a rate of 7.97 mls / minute and the initiator catalyst solution at a rate of 0.67 mls / minute for a total of 180 minutes. At the completion of the cofeeds, a line rinse of 20 grams deionized water was added and the reaction was held for 5 minutes at 85°C. During the hold a thermal chaser solution of 0.25 grams of ammonium persulfate was dissolved in 75 grams of deionized water and added to a syringe. At the completion of the hold, the thermal chaser was added over 15 minutes. At the end of the chaser, the reaction was then cooled to 75°C.

Two sets of chaser activator and catalyst solutions were prepared by dissolving 0.4 grams of 70% tert-butyl hydroperoxide in 12.5 grams deionized water and 0.55 grams isoascorbic acid dissolved in 12.5 grams deionized water. When the reaction temperature reaches 75°C, a promoter solution of 0.006 grams iron sulfate heptahydrate dissolved in 1 gram deionized water was added to the kettle. Immediately chaser activator and catalyst solutions #1 were added to the kettle over 15 minutes with cooling. The reaction was held for 15 minutes then chaser activator and catalyst solutions #2 were added over 15 minutes and then allowed to stir for 20 minutes while cooling to room temperature. The kettle contents were then filtered through 100 mesh bag. The final emulsion polymer had a solids content of 30% and a pH = 2.5. By GC, the total polymers residual monomer content was <5 ppm.

### Example 3 (thermal w redox chaser) (Comparative)

To a three liter round bottom flask, equipped with a mechanical stirrer, heating mantle, thermocouple, condenser and inlets for the addition of monomer, initiator and nitrogen was charge 12.29 grams of 28% sodium lauryl sulfate and 588 grams deionized water. The mixture was set to stir with a nitrogen flow and heated to 84°C. To a plastic lined vessel, 24.29 grams of 28% sodium lauryl sulfate and 792 grams deionized water was added and mixed with overhead stirring. 175.7 grams of MA-20 was charged to the vessel followed by 355.2 grams ethyl acrylate, 0.99 grams trimethylolpropane diallyl ether (TMPDE), 0.55 grams 1-dodecyl mercaptan, 33.19 grams methacrylic acid and 136.62 grams acrylic acid was added slowly to form a smooth, stable monomer emulsion. A kettle initiator charge was prepared adding 0.47 grams ammonium persulfate and 22 grams deionized water and set aside. Cofeed catalyst solution of 0.76 grams ammonium persulfate dissolved in 112.75 grams deionized water was added to a syringe.

When the kettle contents reached reaction temperature of 84°C, the kettle initiator was charged. The monomer emulsion cofeed was added over 107 mins at the following rate: 8.92 mls / minute for 20 minutes, 17.85 mls / minute for 40 minutes and 13.32 mls / minute for 47 minutes. The initiator cofeed was added linearly over 112 minutes. A rinse of 16.5 grams deionized water was added to the monomer cofeed. At the end of the initiator overfeed, the reaction was held for 10 minutes at 84°C. At completion of the hold, the reaction was then cooled to 55°C.

Two sets of chaser activator and catalyst solutions were prepared by dissolving 0.5 grams of 70% tert-butyl hydroperoxide in 15 grams deionized water and 0.28 grams isoascrobic acid dissolved in 15 grams deionized water. When the reaction temperature reaches 55°C, a promoter solution of 6.82 grams of a 0.15% iron sulfate heptahydrate solution was added to the kettle. Immediately chaser activator and catalyst solutions #1 were added to the kettle over 10 minutes then held for 20 minutes. Then chaser activator and catalyst solutions #2 were added over 10 minutes and then held for 20 minutes. At completion of hold, the reaction was cooled to room temperature and filtered through 100 mesh bag. The final emulsion polymer had a solids content of 28.9% and a pH = 2.4. By GC, the total polymers residual monomer content was <200 ppm.

### Example 4

To a three liter round bottom flask, equipped with a mechanical stirrer, heating mantle, thermocouple, condenser and inlets for the addition of monomer, initiator and nitrogen was charge 18.7 grams of 28% sodium lauryl sulfate and 731 grams deionized water. The mixture was set to stir with a nitrogen flow of 20 mls/minute and heated to 89°C. To a plastic lined vessel, 24.29 grams of 28% sodium lauryl sulfate and 792 grams deionized water was added and mixed with overhead stirring. 175.7 grams of MA-20 was charged to the vessel followed by 355.2 grams ethyl acrylate, 0.99 grams trimethylolpropane diallyl ether (TMPDE), 0.55 grams 1-Dodecyl mercaptan, 33.19 grams methacrylic acid and 136.62 grams acrylic acid was added slowly to form a stable monomer emulsion. 68.5 grams of the stable monomer emulsion seed was set aside. A kettle initiator charge was prepared adding 0.64 grams sodium persulfate and 21.4 grams deionized water and set aside. A cofeed activator solution of 0.44 grams isoascorbic acid and 75 grams deionized water was prepared and added to syringe for the addition to the kettle. A cofeed catalyst solution of 0.64 grams sodium persulfate and 75 grams deionized water was prepared and added to syringe for the addition to the kettle.

When the reaction was at temperature, the monomer emulsion seed was added to the kettle and rinsed with 16 grams deionized water, which was immediately followed by the kettle initiator charge. The kettle contents was allowed to react and exotherm to 85°C, and then held for 10 minutes. At the completion of the hold, the reaction was then cooled to 60°C. An addition of 21.45 grams of a 0.15% solution of iron sulfate heptahydrate and 0.54 grams of a 0.15% solution of copper sulfate pentahydrate was added to the kettle during the cool down.

When the reaction temperature reached 60°C, with a bottom target temperature of 55°C, the initiator activator and catalyst cofeeds were started at a rate of 0.797 mls / minute over 94 minutes. 4 minutes after the start of the initiator cofeed solutions, the monomer emulsion cofeed began at a rate of 14.18 mls / minute for a total of 90 mins. At the completion of the reaction, the feed lines were rinsed with 20 grams of deionized water and held at 55C for 20 minutes. During the hold, 2 sets of chaser solutions were prepared. 0.28 grams isoascorbic acid was dissolved in 15 grams deionized water and added to a syringe. 0.5 grams of a 70% tert-butyl hydroperoxide was mixed with 15 grams deionized water and added to a syringe. At the end of the hold, the chaser solutions #1 were added linearly over 10 minutes and held 20 minutes at 55°C. Chaser solutions #2 were added linearly over 10 minutes and held 20 minutes at 55°C The reaction was then allowed to cool to room temperature and filtered through a 100 mesh bag. The final emulsion polymer had a solids content of 27.93% and a pH = 2.4. By GC, the total polymers residual monomer content was <300 ppm.

### Example 5 (redox / shot)

To a three liter round bottom flask, equipped with a mechanical stirrer, heating mantle, thermocouple, condenser and inlets for the addition of monomer, initiator and nitrogen was charge 18.7 grams of 28% sodium lauryl sulfate and 731 grams deionized water. The mixture was set to stir with a nitrogen flow of 20 mls/minute and heated to 89°C. To a plastic lined vessel, 12.6 grams of 28% sodium lauryl sulfate and 630 grams deionized water was added and mixed with overhead stirring. 99 grams of MA-23 was charged to the vessel followed by 302 grams ethyl acrylate and then 302 grams methacrylic acid was added slowly to form a smooth, stable monomer emulsion. 68.6 grams of the stable monomer emulsion seed was set aside. A kettle initiator charge was prepared adding 0.5 grams sodium persulfate and 21.4 grams of deionized water and set aside. A cofeed activator solution of 0.385 grams isoascorbic acid and 75 grams deionized water was prepared and added to syringe for the addition to the kettle. A cofeed catalyst solution of 0.19 grams sodium persulfate and 75 grams deionized water was prepared and added to syringe for the addition to the kettle.

When the reaction was at temperature, the monomer emulsion seed was added to the kettle and rinsed with 16 grams deionized water, which was immediately followed by the kettle initiator charge. The kettle contents was allowed to react and exotherm to 85°C, and then held for 10 minutes. At the completion of the hold, the reaction was then cooled to 53°C. An addition of 14.3 grams of a solution of 0.15% iron sulfate heptahydrate and 0.54 grams of 0.15% solution of copper sulfate pentahydrate was added to the kettle during the cool down.

When the reaction temperature reached 53°C, with a bottom target temperature of 50°C, the initiator activator and catalyst cofeeds were started at a rate of 0.81 mls / minute over 69.5 minutes. 2 minutes after the start of the initiator cofeed solutions, the monomer emulsion cofeed began at a rate of 14.18 mls / minute for a total of 67.5 mins. The cofeeds were then stopped and the reaction was held for 15 minutes. The monomer emulsion cofeed was then re-started and added at a rate of 31 mls/minute for 10 minutes. 25 grams deionized water was added to the monomer vessel as a rinse. Temperature decrease of 4°C was observed. After a 5 minutes hold the remaining initiator cofeeds were added quickly over 30 seconds. In 4 minutes the kettle returned to reaction temperature of 53°C and reached a maximum temperature of 56°C. After a 10 minute hold the reaction returned to 53°C. During the hold chaser solutions were prepared. 0.28 grams isoascorbic acid was dissolved in 25 grams deionized water and added to a syringe. 0.5 grams of a 70% tert-butyl hydroperoxide was mixed with 25 grams deionized water and added to a syringe. At the end of the hold, the chaser solutions were added linearly over 10 minutes and held 20 minutes at 53°C. The reaction was then allowed to cool to room temperature and filtered through a 100 mesh bag. The final emulsion polymer had a solids content of 29.3% and a pH = 2.98. By GC, the total polymers residual monomer content was <5 ppm.

### Example 6 (Redox paper coatings example)

To a three liter round bottom flask, equipped with a mechanical stirrer, heating mantle, thermocouple, condenser and inlets for the addition of monomer, initiator and nitrogen was charge 18.7 grams of 28% sodium lauryl sulfate and 731 grams deionized water. The mixture was set to stir with a nitrogen flow of 20 mls/minute and heated to 89°C. To a plastic lined vessel, 12.6 grams of 28% sodium lauryl sulfate and 630 grams deionized water was added and mixed with overhead stirring. 19.8 grams of MA-20 was charged to the vessel followed by 401.9 grams ethyl acrylate, and 273 grams methacrylic acid was added slowly to form a stable monomer emulsion. 68.2 grams of the stable monomer emulsion seed was set aside. A kettle initiator charge was prepared adding 0.48 grams sodium persulfate and 21.4 grams deionized water and set aside. A cofeed activator solution of 0.35 grams isoascorbic acid and 75 grams deionized water was prepared and added to syringe for the addition to the kettle. A cofeed catalyst solution of 0.55 grams sodium persulfate and 75 grams deionized water was prepared and added to syringe for the addition to the kettle.

When the reaction was at temperature, the monomer emulsion seed was added to the kettle and rinsed with 16 grams deionized water, which was immediately followed by the kettle initiator charge. The kettle contents was allowed to react and exotherm to 85°C, and then held for 10 minutes. At the completion of the hold, the reaction was then cooled to 60°C. An addition of 21.45 grams of a 0.15% solution of iron sulfate heptahydrate and 0.54 grams of a 0.15% solution of copper sulfate pentahydrate was added to the kettle during the cool down.

When the reaction temperature reached 60°C, with a bottom target temperature of 55°C, the initiator activator and catalyst cofeeds were started at a rate of 0.797 mls / minute over 94 minutes. 4 minutes after the start of the initiator cofeed solutions, the monomer emulsion cofeed began at a rate of 14.18 mls / minute for a total of 90 mins. At the completion of the reaction, the feed lines were rinsed with 30 grams of deionized water and held at 55C for 20 minutes. During the hold, 2 sets of chaser solutions were prepared. 0.582 grams isoascorbic acid was dissolved in 25 grams deionized water and added to a syringe. 0.423 grams of a 70% tert-butyl hydroperoxide was mixed with 25 grams deionized water and added to a syringe. At the end of the hold, the chaser solutions #1 were added linearly over 10 minutes and held 20 minutes at 55°C. Chaser solutions #2 were added linearly over 10 minutes and held 20 minutes at 55°C The reaction was then allowed to cool to room temperature and filtered through a 100 mesh bag. The final emulsion polymer had a solids content of 28.3% and a pH = 2.6. By GC, the total polymers residual monomer content was <50 ppm.

A summary of the monomer contents of inventive Examples 1, 4, 5 and 6 is presented in the table below

| | |
|---|---|
| Example 1 | 10% MA-20 / 49.5% EA / 40.5% MAA |
| | |
| Example 4 | 17.98% MA-20 / 51.92% EA / 9.99% MAA / 19.97% AA / 0.13% TMPDE |
| | |
| Example 5 | 9.8% MA-23 / 43 EA / 47.2% MAA |
| | |
| Example 6 | 2% MA-20 / 58% EA / 40% MAA |

### Example 7 (Comparative) (Thermal @ 86°C)

A monomer emulsion was prepared by combining 977g water, 37g sodium lauryl sulfate (28%), 182.9g MA-23, 556g ethyl acrylate, and 554.1g methacrylic acid in the order specified. A reactor initiator charged was prepared consisting of 1.43g ammonium persulfate in 15g deionized water. A separate cofeed initiator solution was prepared consisting of 0.57g ammonium persulfate in 120g deionized water.

To a 5L, 4-neck flask equipped with a stirrer, reflux condenser, thermocouple, nitrogen inlet, and feed inlet ports was charged 1084g water and 37g sodium lauryl sulfate. The reactor contents were heated to 86°C with nitrogen and the reactor initiator charged. Immediately following the initiator charge, the monomer emulsion and the cofeed initiator solution were each added separately to the reactor over a period of 110 minutes at uniform rate while maintaining the temp at 86°C. Upon completion of the monomer emulsion and cofeed initiator feeds, the feed lines were rinsed to the reactor with 65g water and 12 gram water respectively. The reaction mixture was then cooled to 60°C and 26g ferrous sulfate solution (0.15%), 16g tert butyl hydroperoxide solution (4.94%) and 15g isoascorbic acid solution (3.8%) added as shot to the reactor in 1 minute intervals. 15 minutes later another shot of 16g tert butyl hydroperoxide solution (4.94%) and 15g isoascorbic acid solution (3.8%) were added to the reactor. The reaction mixture was cooled to 40°C and 360g sodium acetate solution (0.9%) added. 190g isothiazolone biocide solution (0.076%) was then feed to the reactor over 10 minutes. The reaction mixture was cooled to room temp and filtered through a 100 mesh screen. Final emulsion polymer was 30.2% solids and had a pH= 4.2. Residual monomer content was <5 ppm.

### Example 8 (Comparative) (Thermal @ 86°C)

A monomer emulsion was prepared by combining 977g water, 37g sodium lauryl sulfate (28%), 37g MA-20, 751.57g ethyl acrylate, and 507.86g methacrylic acid in the order specified. A reactor initiator charged was prepared consisting of 1.43g ammonium persulfate in 15g deionized water. A separate cofeed initiator solution was prepared consisting of 0.57g ammonium persulfate in 120g deionized water.

To a 5L, 4-neck flask equipped with a stirrer, reflux condenser, thermocouple, nitrogen inlet, and feed inlet ports was charged 1084g water and 37g sodium lauryl sulfate. The reactor contents were heated to 86°C with nitrogen and the reactor initiator charged. Immediately following the initiator charge, the monomer emulsion and the cofeed initiator solution were each added separately to the reactor over a period of 110 minutes at uniform rate while maintaining the temp at 86°C. Upon completion of the monomer emulsion and cofeed initiator feeds, the feed lines were rinsed to the reactor with 65g water and 12 gram water respectively. The reaction mixture was then cooled to 60°C and 26g ferrous sulfate solution (0.15%), 16g tert butyl hydroperoxide solution (4.94%) and 15g isoascorbic acid solution (3.8%) added as shot to the reactor in 1 minute intervals. 15 minutes later another shot of 16g tert butyl hydroperoxide solution (4.94%) and 15g isoascorbic acid solution (3.8%) were added to the reactor. The reaction mixture was cooled to 40°C and 360g sodium acetate solution (0.9%) added. 190g isothiazolone biocide solution (0.076%) was then feed to the reactor over 10 minutes. The reaction mixture was cooled to room temp and filtered through a 100 mesh screen. Final emulsion polymer was 29.45% solids and had a pH= 4.1. Residual monomer content was <5 ppm.

### Example 9 Heavy Duty Liquid Laundry Formulation; Comparison of Example 1 (Redox Process) and Example 2 (Thermal Process)

Base Formulation:

| **Chemical** | **Wt % Added** |
|---|---|
| *NANSA SS*/*U -30% Active (LABS)* | 30.0 [9% actives] |
| EMPICOL ESB 70% Active (AEOS) | 17.1 [12% actives] |
| Alcohol Ethoxylate (NEODOL 25-7, 100% active) | 15.0 [15% actives] |
| Polypropylene Glycol 400 | 4.0 |
| Sodium Citrate | 3.0 |
| Water | 20.9 |
| polymer | 10.0 |

| | |
|---|---|
| Notes: 1. LABS=Linear Alkyl Benzene Sulfonate; 2. AEOS= Alkyl Ether Sulfate (C₁₂H₂₅(OCH₂CH₂)₂₋₄SO₄⁻Na⁺); 3. NEODOL 25-7 is C₁₃H₂₇(CH₂CH₂O)₇H | |

The formulation was prepared in the following order with overhead mechanical mixing: 1. water; 2. NANSA SS; 3. ESB 70 ; 4. Poly Propylene Glycol 400; 5. Na Citrate; 6 Alcohol Ethoxylate (Neodol 25-7).

| | time to dissolve raw materials |
|---|---|
| Water + NANSA SS 30 | 2 min |
| + EMPICOL ESB 70 | 5 min |
| + PPG 400 | 14 min |
| + Sodium Citrate | 18 min |
| + NEODOL 25-7 | 27 min |

The polymer was added to the base with mixing to achieve a level of 0.5% active in the formulation. The final pH was checked and adjusted with 10% NaOH (in water) to a pH 8.2 to 8.5 for final formulation.

Rheology: TA Instrument Advanced Rheometer AR2000. The sample was measured using the rheometer to obtain the viscosity versus shear rate (Flow Curve), starting at low shear to high shear at 20 °C.

Additional Measurements: Formulation samples we measured at 20 C at 1 day using a standard Brookfield viscometer LV DVIII Ultra. Measures were done with spindle 3 (for this rheology study).

| | 90 RPM Brookfield at 1 day | viscosity at 1 sec⁻¹ | viscosity at 10 sec⁻¹ | viscosity at 20 sec⁻¹ |
|---|---|---|---|---|
| Example 2 (Comparative) | 370 | 522 | 515 | 511 |
| Example 1 (Invention) | 465 | 623 | 611 | 604 |

viscosities are reported in mPa·s

### Example 10 Body Wash Formulation:

| | polymer solids (%) | polymer dry gram (g) | water (g) | 26% STEOL CS-230 (g) | 10% KOH (g) | 30% AMPHOSO L CA (g) | pH | Clarity (NTU) |
|---|---|---|---|---|---|---|---|---|
| Ex. 3 | 28.91% | 1.7076 | 37.5 | 48.5 | 2.34 | 5.80 | 6.14 | 5.3 |
| Ex. 4 | 27.93% | 1.7076 | 37.0 | 48.5 | 2.64 | 5.80 | 6.22 | 3.6 |

| | | | | | | | | |
|---|---|---|---|---|---|---|---|---|
| Notes: STEOL CS-230 is 26% Sodium Laureth Sulfate from Stepan Chemical; AMPHOSOL CA = 30% COCAMIDOPROPYL BETAINE from Stepan Clarity was measured using an AF Scientific, Micro 100 Turbidimeter. | | | | | | | | |

### Samples: Ex. 3 - Thermal process; Ex. 4 - Redox 55 °C process

### STEPS:

1. Mixed DI Water with RM Polymer
2. Added STEOL CS-230 under agitation.
3. Adjusted pH with 10% KOH solution to 6.1 - 6.2.
4. Added AMPHOSOL CA addition.
5. Qs to 100 grams with deionized water then check pH.

| Example 3 | | | Example 4 | |
|---|---|---|---|---|
| shear rate | viscosity | | shear rate | viscosity |
| 1/s | Pa.s | | 1/s | Pa.s |
| 1.01E-04 | 34.8 | | 1.03E-04 | 684.5 |
| 1.23E-04 | 36.0 | | 1.28E-04 | 689.9 |
| 1.47E-04 | 38.0 | | 1.59E-04 | 702.1 |
| 1.94E-04 | 36.3 | | 2.01E-04 | 698.8 |
| 2.29E-04 | 38.6 | | 2.58E-04 | 684.5 |
| 2.86E-04 | 39.1 | | 3.41E-04 | 652.7 |
| 3.62E-04 | 38.8 | | 4.30E-04 | 651.3 |
| 4.54E-04 | 38.9 | | 5.56E-04 | 634.9 |
| 5.74E-04 | 38.7 | | 7.32E-04 | 606.8 |
| 7.10E-04 | 39.5 | | 9.94E-04 | 562.7 |
| 9.03 E-04 | 39.1 | | 1.34E-03 | 526.1 |
| 1.13E-03 | 39.3 | | 1.90E-03 | 467.5 |
| 1.44E-03 | 38.9 | | 2.75E-03 | 405.8 |
| 1.87E-03 | 37.7 | | 4.05E-03 | 346.5 |
| 2.44E-03 | 36.4 | | 5.99E-03 | 295.4 |
| 3.21E-03 | 34.8 | | 8.97E-03 | 248.2 |
| 4.29E-03 | 32.8 | | 0.01339 | 209.2 |
| 5.88E-03 | 30.1 | | 0.01983 | 177.8 |
| 8.22E-03 | 27.1 | | 0.02898 | 153.2 |
| 0.01168 | 24.0 | | 0.04167 | 134.2 |
| 0.01678 | 21.0 | | 0.05892 | 119.4 |
| 0.02435 | 18.2 | | 0.08196 | 108.1 |
| 0.03545 | 15.8 | | 0.1128 | 98.9 |
| 0.05152 | 13.7 | | 0.1532 | 91.7 |
| 0.07415 | 12.0 | | 0.2069 | 85.4 |
| 0.1054 | 10.6 | | 0.2771 | 80.3 |
| 0.1481 | 9.5 | | 0.3686 | 76.0 |
| 0.2028 | 8.7 | | 0.4888 | 72.2 |
| 0.2752 | 8.1 | | 0.6486 | 68.5 |
| 0.3677 | 7.6 | | 0.857 | 65.2 |
| 0.4825 | 7.3 | | 1.123 | 62.7 |
| 0.6255 | 7.1 | | 1.457 | 60.8 |
| 0.7981 | 7.0 | | 1.875 | 59.5 |
| 1.01 | 7.0 | | 2.403 | 58.4 |
| 1.263 | 7.0 | | 3.083 | 57.3 |
| 1.563 | 7.1 | | 3.511 | 57.0 |
| 1.918 | 7.3 | | | |
| 2.337 | 7.6 | | | |
| 2.839 | 7.8 | | | |
| 3.442 | 8.1 | | | |

### Example 11 Paint Data

The performance obtained by the use of associative thickeners is demonstrated in a latex paint composition. A latex unthickened paint composition, Pre-paint #1, was prepared by combining:

| | |
|---|---|
| KRONOS 4311 titanium dioxide slurry | 263.4 g |
| Water | 150.4 g |
| Ethylene glycol | 24.3 g |
| ROPAQUE Ultra | 49.8 g |
| RHOPLEX SG-30 binder | 421.8 g |
| TEXANOL | 19.2 g |
| TRITON X-405 | 2.5 g |
| DREWPLUS L-475 | 4.1g |
| Total | 935.5 g |

KRONOS 4311 is a product of KRONOS Incorporated, Chelmsford, MA.
TRITON X-405, ROPAQUE Ultra and RHOPLEX SG-30 are products of The Dow Chemical Company, Midland, MI.
DREWPLUS L-475 is a product of Ashland Specialty Chemical Company, Dublin, OH. AMP-95 is a product of Angus Chemicals, Buffalo Grove, IL.

The formulated paint was obtained by adding thickener and water to 935.5 g of Pre-paint #1. To maintain constant solids of the fully formulated paint, the combined weight of added thickener, AMP-95 and water equals 79.9 g. The density of the fully formulated paint was 1015.4 pounds per 100 gallons (1.2 kg per liter). Thickeners were added as aqueous dispersions at 15% weight solids.

Formulated paints were made by the following method. To 935.5 g Pre-paint #1, an amount of aqueous thickener dispersion and an amount of water and an amount of AMP-95 were slowly added and stirred on a lab mixer for ten minutes. The total combined amount of aqueous thickener dispersions, AMP-95 and water is 79.9 grams. Final paint pH is 8.9. Sufficient thickener was added to provide a paint with a initial Stormer viscosity of 103 KU. In the following data presentation, thickener concentrations in the thickened paint are described in terms of dry grams of thickener added.

| | g thickener (dry) | Stormer viscosity (KU) | ICI viscosity (poise) |
|---|---|---|---|
| Ex. 7 (comp.) | 3.39 | 103 | 0.75 |
| Ex. 5 | 2.65 | 103 | 0.75 |

"Stormer viscosity" is a measure of the mid-shear viscosity as measured by a Stormer viscometer. The Stormer viscometer is a rotating paddle viscometer that is compliant with ASTM-D562. Stormer viscosity was measured on a Brookfield Krebs Unit Viscometer KU-1+ available from Brookfield Engineering Labs, Middleboro, MA. "KU" indicates Krebs units.

"ICI viscosity" is the viscosity, expressed in units of poise, measured on a high shear rate, cone and plate viscometer known as an ICI viscometer. An ICI viscometer is described in ASTM D4287. It measures the viscosity of a paint at approximately 10,000 sec⁻¹. ICI viscosities of paints were measured on a viscometer manufactured by Research Equipment London, Ltd. An equivalent ICI viscometer is the ELCOMETER 2205 manufactured by ELCOMETER, Incorporated in Rochester Hills, Michigan. The ICI of a paint typically correlates with the amount of drag force experienced during brush application of the paint.

### Example 12 Paper Coatings Data

Four identical paper coating master batches were made by blending on a benchtop mixer 172.5 g of OMYACARB H-90 calcium carbonate (76.09% solids slurry from Omya), 61.48 g of KAOGLOSS #1 clay (71.16% solids slurry), 39.16 g of GENCRYL 9780 binder (49.15% solids from Rohmnova Solutions, Inc.). The coating thickened with 0.12% of Example 8 was produced by adding 1.17 g of Example 8, 15.13 g of water and 1.28 g of 15% by weight sodium hydroxide aqueous solution to one of the four master batches. The coating thickened with 0.12% of Example 6 was produced by adding 1.22 g of Example 6, 14.86 g of water and 1.58 g of 15% by weight sodium hydroxide aqueous solution. The coating thickened with 0.18% of Example 8 was produced by adding 1.76 g of Example 8, 14.44 g of water and 1.75 g of 15% by weight sodium hydroxide aqueous solution. The coating thickened with 0.18% of Example 6 was produced by adding 1.83 g of Example 6, 14.19 g of water and 1.98 g of 15% by weight sodium hydroxide aqueous solution. Final pH values of all paper coatings were 8.6 . The paper coatings were equilibrated for one hour in a 25°C constant temperature room before measurements were recorded. The rate of water loss from the coating was measured three times for each coating on a ÅÅ-GWR device. A lower rate of water loss indicates better water retention. Better water retention is a desirable property in a paper coating.

### GENCRYL 9780 paper Coatings

| | | Åbo Åkademi method | Å Åkademi method | |
|---|---|---|---|---|
| | dry thickener weight on wet coating weight | Rate of Water Loss | Average Rate of Water Loss | Brookfield Viscosity #5 spindle 100 rpm |
| | | (g/sq meter) | (g/sq meter) | (mPa·s) |
| Ex. 8 | 0.12% | 98.7 | 100.3 | 1436 |
| (comp.) | | 102.5 | | |
| | | 99.5 | | |
| Ex. 6 | 0.12% | 83.7 | 85.9 | 1372 |
| | | 87.8 | | |
| | | 86.1 | | |
| Ex. 8 | 0.18% | 78.4 | 79.5 | 2348 |
| (comp.) | | 80.8 | | |
| | | 79.2 | | |
| Ex. 6 | 0.18% | 69.5 | 68.0 | 2448 |
| | | 68.3 | | |
| | | 66.2 | | |

## Claims

1. A method for preparing hydrophobically modified rheology modifiers; said method comprising polymerizing a monomer mixture comprising:
(i) a monomer selected from the group consisting of:
(a) H₂C=C(R)C(O)X(CH₂CH₂O)ₙ(CH(R')CH₂O)ₘR";
(b) H₂C=C(R)C₆H₄C(CH₃)₂NHCO₂(CH₂CH₂O)ₙ(CH(R')CH₂O)ₘR"; and combinations thereof; wherein X is O or NH, R is H or CH₃, R' is C₁-C₂ alkyl; R" is C₈-C₂₂ alkyl, C₈-C₁₆ alkylphenyl or C₁₃-C₃₆ aralkylphenyl; n is an average number from 6-100 and m is an average number from 0-50, provided that n≥m and m+n is 6-100; and
(ii) a C₃-C₆ carboxylic acid monomer;
wherein at least 30% of polymerization occurs in the presence of an oxidant, a reductant and a metal catalyst, and substantially in the absence of a peroxide, hydroperoxide or perester containing an alkyl group having at least five carbon atoms.

2. The method of claim 1 in which the oxidant is selected from the group consisting of persulfate, perborate, percarbonate, and combinations thereof; polymerization is conducted substantially in the absence of peroxides, hydroperoxides or peresters; and the polymerization is an aqueous emulsion polymerization.

3. The method of claim 2 in which the reductant is isoascorbic acid; and the metal catalyst is selected from the group consisting of iron, copper and combinations thereof.

4. The method of claim 3 in which the monomer mixture comprises from 15 to 60 wt% C₃-C₆ carboxylic acid monomer, 1 to 25 wt% H₂C=C(R)CO₂(CH₂CH₂O)ₙ(CH(R')CH₂O)ₘR" and 25 to 65 wt% C₁-C₄ alkyl (meth)acrylate.

5. The method of claim 4 in which R" is C₁₀-C₂₂ alkyl, n is 15-30 and m is 0-5.

6. The method of claim 1 in which the monomer mixture comprises from 15 to 60 wt% C₃-C₆ carboxylic acid monomer, 1 to 25 wt% H₂C=C(R)CO₂(CH₂CH₂O)ₙ(CH(R')CH₂O)ₘR" and 25 to 65 wt% C₁-C₄ alkyl (meth)acrylate.

7. The method of claim 6 in which R" is C₁₀-C₂₂ alkyl, n is 15-30 and m is 0-5.

8. The method of claim 7 in which the C₃-C₆ carboxylic acid monomer is (meth)acrylic acid.

9. The method of claim 8 in which in which the C₁-C₄ alkyl (meth)acrylate is a C₂-C₃ alkyl acrylate, R" is C₁₂-C₂₀ alkyl, n is 18-25, m is 0-3 and R is methyl.

10. The method of claim 9 in which the monomer mixture comprises 25 to 55 wt% (meth)acrylic acid, 5 to 25 wt% H₂C=C(R)CO₂(CH₂CH₂O)ₙ(CH(R')CH₂O)ₘR" and 40 to 60 wt% C₂-C₃ alkyl acrylate.

## Patentansprüche

1. Ein Verfahren zum Herstellen von hydrophob modifizierten Rheologiemodifikatoren;
wobei das Verfahren das Polymerisieren einer Monomermischung beinhaltet, die Folgendes beinhaltet:
(i) ein Monomer, ausgewählt aus der Gruppe, die aus Folgendem besteht:
(a) H₂C=C(R)C(0)X(CH₂CH₂O)ₙ(CH(R')CH₂O)ₘR";
(b) H₂C=C(R)C₆H₄C(CH₃)₂NHCO₂(CH₂CH₂O)ₙ(CH(R')CH₂O)ₘR"; und Kombinationen davon; wobei X O oder NH ist, R H oder CH₃ ist, R' C₁-C₂-Alkyl ist; R" C₈-C₂₂-Alkyl, C₈-C₁₆-Alkylphenyl oder C₁₃-C₃₆-Aralkylphenyl ist; n eine durchschnittliche Zahl von 6-100 ist und m eine durchschnittliche Zahl von 0-50 ist, vorausgesetzt, dass n ≥ m und m + n 6-100 ist; und
(ii) ein C₃-C₆-Carbonsäuremonomer;
wobei mindestens 30 % der Polymerisation in der Gegenwart eines Oxidationsmittels, eines Reduktionsmittels und eines Metallkatalysators und im Wesentlichen in der Abwesenheit eines Peroxids, Hydroperoxids oder Peroxyesters, das/der eine Alkylgruppe mit mindestens fünf Kohlenstoffatomen enthält, geschieht.

2. Verfahren gemäß Anspruch 1, wobei das Oxidationsmittel ausgewählt ist aus der Gruppe, bestehend aus Persulfat, Perborat, Percarbonat und Kombinationen davon; die Polymerisation im Wesentlichen in der Abwesenheit von Peroxiden, Hydroperoxiden oder Peroxyestern durchgeführt wird; und die Polymerisation eine wässrige Emulsionspolymerisation ist.

3. Verfahren gemäß Anspruch 2, wobei das Reduktionsmittel Isoascorbinsäure ist; und der Metallkatalysator ausgewählt ist aus der Gruppe, bestehend aus Eisen, Kupfer und Kombinationen davon.

4. Verfahren gemäß Anspruch 3, wobei die Monomermischung von 15 bis 60 Gew.-% C₃-C₆-Carbonsäuremonomer, 1 bis 25 Gew.-% H₂C=C(R)CO₂(CH₂CH₂O)ₙ(CH(R')CH₂O)ₘR" und 25 bis 65 Gew.-% C₁-C₄-Alkyl(meth)acrylat beinhaltet.

5. Verfahren gemäß Anspruch 4, wobei R" C₁₀-C₂₂-Alkyl ist, n 15-30 ist und m 0-5 ist.

6. Verfahren gemäß Anspruch 1, wobei die Monomermischung von 15 bis 60 Gew.-% C₃-C₆-Carbonsäuremonomer, 1 bis 25 Gew.-% H₂C=C(R)CO₂(CH₂CH₂O)ₙ(CH(R')CH₂O)ₘR" und 25 bis 65 Gew.-% C₁-C₄-Alkyl(meth)acrylat beinhaltet.

7. Verfahren gemäß Anspruch 6, wobei R" C₁₀-C₂₂-Alkyl ist, n 15-30 ist und m 0-5 ist.

8. Verfahren gemäß Anspruch 7, wobei das C₃-C₆-Carbonsäuremonomer (Meth)acrylsäure ist.

9. Verfahren gemäß Anspruch 8, wobei das C₁-C₄-Alkyl(meth)acrylat ein C₂-C₃-Alkylacrylat ist, R" C₁₂-C₂₀-Alkyl ist, n 18-25 ist, m 0-3 ist und R Methyl ist.

10. Verfahren gemäß Anspruch 9, wobei die Monomermischung 25 bis 55 Gew.-% (Meth)acrylsäure, 5 bis 25 Gew.-% H₂C=C(R)CO₂(CH₂CH₂O)ₙ(CH(R')CH₂O)ₘR" und 40 bis 60 Gew.-% C₂-C₃-Alkylacrylat beinhaltet.

## Revendications

1. Un procédé pour préparer des modificateurs de rhéologie modifiés hydrophobiquement ;
ledit procédé comprenant polymériser un mélange de monomères comprenant :
(i) un monomère sélectionné dans le groupe consistant en :
(a) H₂C=C(R)C(O)X(CH₂CH₂O)ₙ(CH(R')CH₂O)ₘR" ;
(b) H₂C=C(R)C₆H₄C(CH₃)₂NHCO₂(CH₂CH₂O)ₙ(CH(R')CH₂O)ₘR" ; et des combinaisons de ceux-ci ; où X est O ou NH, R est H ou CH₃, R' est un alkyle en C₁-C₂ ; R" est un alkyle en C₈-C₂₂, un alkylphényle en C₈-C₁₆ ou un aralkylphényle en C₁₃-C₃₆ ; n est un nombre moyen allant de 6 à 100 et m est un nombre moyen allant de 0 à 50, à condition que n ≥ m et que m + n soit compris entre 6 et 100 ; et
(ii) un monomère d'acide carboxylique en C₃-C₆ ;
dans lequel au moins 30 % de polymérisation se produit en présence d'un oxydant, un réducteur et un catalyseur métallique, et substantiellement en l'absence d'un peroxyde, hydroperoxyde ou perester contenant un groupe alkyle ayant au moins cinq atomes de carbone.

2. Le procédé de la revendication 1 dans lequel l'oxydant est sélectionné dans le groupe consistant en persulfate, perborate, percarbonate, et des combinaisons de ceux-ci ; la polymérisation est effectuée substantiellement en l'absence de peroxydes, hydroperoxydes ou peresters ; et la polymérisation est une polymérisation en émulsion aqueuse.

3. Le procédé de la revendication 2 dans lequel le réducteur est un acide isoascorbique ; et le catalyseur métallique est sélectionné dans le groupe consistant en fer, cuivre et des combinaisons de ceux-ci.

4. Le procédé de la revendication 3 dans lequel le mélange de monomères comprend de 15 à 60 % en poids de monomère d'acide carboxylique en C₃-C₆, de 1 à 25 % en poids de H₂C=C(R)CO₂(CH₂CH₂O)ₙ(CH(R')CH₂O)ₘ, R" et de 25 à 65 % en poids de (méth)acrylate d'alkyle en C₁-C₄.

5. Le procédé de la revendication 4 dans lequel R" est un alkyle en C₁₀-C₂₂, n fait de 15 à 30 et m fait de 0 à 5.

6. Le procédé de la revendication 1 dans lequel le mélange de monomères comprend de 15 à 60 % en poids de monomère d'acide carboxylique en C₃-C₆, de 1 à 25 % en poids de H₂C=C(R)CO₂(CH₂CH₂O)ₙ(CH(R')CH₂O)ₘ, R" et de 25 à 65 % en poids de (méth)acrylate d'alkyle en C₁-C₄.

7. Le procédé de la revendication 6 dans lequel R" est un alkyle en C₁₀-C₂₂, n fait de 15 à 30 et m fait de 0 à 5.

8. Le procédé de la revendication 7 dans lequel le monomère d'acide carboxylique en C₃-C₆ est un acide (méth)acrylique.

9. Le procédé de la revendication 8 dans lequel le (méth)acrylate d'alkyle en C₁-C₄ est un acrylate d'alkyle en C₂-C₃, R" est un alkyle en C₁₂-C₂₀, n fait de 18 à 25, m fait de 0 à 3 et R est un méthyle.

10. Le procédé de la revendication 9 dans lequel le mélange de monomères comprend de 25 à 55 % en poids d'acide (méth)acrylique, de 5 à 25 % en poids de H₂C=C(R)CO₂(CH₂CH₂O)ₙ(CH(R')CH₂O)ₘ, R" et de 40 à 60 % en poids d'acrylate d'alkyle en C₂-C₃.
